# EUROPÄISCHE PATENTSCHRIFT

(11) **EP 0 420 039 B1**
(45) Veröffentlichungstag und Bekanntmachung des Hinweises auf die Patenterteilung: **27.03.1996**
(21) Anmeldenummer: 90118091.9
(22) Anmeldetag: 20.09.1990
(51) Int. Cl.: B23Q 11/00

(54) **Einrichtung zum Reinigen des Befestigungsschaftes eines Werkzeuges oder eines Werkzeughalters**
Cleaning device for the holding shank of a tool or tool-holder
Dispositif pour nettoyer la queue de fixation d'un outil ou d'un porte-outil

(30) Priorität: 29.09.1989 CH 3557/89
(43) Veröffentlichungstag der Anmeldung: 03.04.1991
(73) Patentinhaber: Starrfräsmaschinen AG, CH-9400 Rorschacherberg (CH)
(72) Erfinder: Novak, Peter, CH-8274 Tägerwilen (CH)
(74) Vertreter: EGLI-EUROPEAN PATENT ATTORNEYS

(56) Entgegenhaltungen:
- EP-A- 0 065 293
- DD-A- 86 549
- DD-A- 140 998
- DE-A- 2 754 636
- DE-C- 699 027
- GB-A- 2 075 381
- JP-A- 1 153 248
- JP-A-61 288 956
- JP-A-63 016 943
- US-A- 4 656 728

## Beschreibung

Die Erfindung betrifft eine Einrichtung zum Reinigen des Schaftteils eines Werkzeugs oder eines eines Werkzeughalters gemäss dem Oberbegriff des Anspruchs 1 und ein Verfahren zum Betrieb dieser Einrichtung.

Die Halterung eines Werkzeuges oder eines Werkzeughalters für das Werkzeug in der Maschinenspindel trägt wesentlich zur Leistungsfähigkeit von Werkzeugmaschinen und deren Bearbeitungsgenauigkeit bei. Ein grosser Teil der Werkzeuge und der Werkzeughalter wird hierzu mit einem Schaftteil versehen, der als Konus- oder Zylinderschaft ausgebildet ist und in einer entsprechenden Aufnahme der Maschinenspindel einspannbar ist. Hierbei ist beim Einspannen des Werkzeuges oder des Werkzeughalters in die Maschinenspindel erforderlich, dass höchste Sauberkeit der Auflageflächen des für die Befestigung vorgesehenen Schaftteils gewährleistet ist.

Bei den in Bearbeitungszentren verwendeten Werkzeugmaschinen wird gewöhnlich eine grössere Anzahl von Werkzeugen bereitgestellt, die in einem Werkzeugspeicher gelagert und entsprechend dem Bearbeitungsprogramm abgerufen und durch Handhabungsgeräte in die Maschinenspindel eingesetzt werden. Es genügt somit im allgemeinen nicht, die Sauberkeit der Auflageflächen des Schaftteils der Werkzeuge beim Zusammenstellen des Werkzeugsatzes zu gewährleisten. Vielmehr ist zu beachten, dass die im Werkzeugspeicher gelagerten Werkzeuge und Werkzeughalter einer, wenn auch nur geringen Verschmutzung ausgesetzt sind, die beim Einspannen des Werkzeuges die genaue Lagerung des Schaftteils in der Maschinenspindel beeinträchtigen kann. Aus diesem Grund ist es zweckmässig, den Schaftteil eines Werkzeuges oder Halters vor dem Einsetzen in die Werkzeugspindel zu reinigen, womit nicht nur eine hohe Fertigungsgenauigkeit gewährleistet wird, sondern auch die Innenpartie der Werkzeug-Maschinenspindel vor Schmutzpartikeln und Beschädigung durch eingeklemmte Späne geschützt wird. Die bekannten Vorrichtungen lösen erfahrungsgemäss das Problem der Einhaltung einer hohen Sauberkeit der Schaftteile der Werkzeuge und Halter nur unvollkommen. Zwar kann die Entfernung von grösseren Schmutzpartikeln und Spänen gewährleistet werden, nicht aber die Entfernung kleinerer Schmutzteilchen, die an der meistens auf den Auflageflächen vorhandenen fettigen Oberfläche haften.

Es sind verschiedene Möglichkeiten bekannt, wie die Auflagefläche des Schaftteils des Werkzeuges sauber gehalten werden kann. Meist wird die Auflagefläche des Schaftteils mit einer Bürste behandelt, welche rotierend über die Auflagefläche bewegt wird. Ist der Schaftteil ein Konus, wie er bei Werkzeugen häufig verwendet wird, muss die Bürste eine konische Hohlform aufweisen.

Ein gattungsgemässes System ist aus der DD-A-140 998 bekannt. Dort ist in der Reinigungskammer ein käfigartiges System mit Strahldüsen vorgesehen, das den eingeschobenen Werkzeugschaft umgibt und denen von einer Pumpvorrichtung Reinigungsflüssigkeit zugeführt wird, mit der der Schaft besprüht wird. Die Reinigungsflüssigkeit, die sich in der Reinigungskammer sammelt, wird der Pumpvorrichtung wieder zugeleitet.

Das beschriebene System ist konstruktiv verhältnismässig aufwendig und kann keine allseitig gründliche und gleichmässige Reinigung sicherstellen.

Eine Reinigung von bearbeiteten Werkstücken mittels Ultraschall in einer Dampfreinigungsanlage ist aus der JP-A-63 016 943 bekannt. Bei dieser Vorrichtung wird die Ultraschallreinigung durch Eintauchen der Werkstücke in ein im wesentlichen stationäres Reinigungsmedium (Freon) in verhältnismässig grossen Behältern durchgeführt. Die Ultraschallgeneratoren sind an den Behälterwänden angeordnet und ragen in die Behälter hinein. Der Nachteil dieser Vorrichtung besteht darin, dass keine hohe Schallintensität erreichbar ist und die Reinigungswirkung daher nicht unter allen Umständen ausreicht.

Der Erfindung liegt die Aufgabe zugrunde, eine Einrichtung zur Reinigung des Schaftteils eines Werkzeugs oder eines Werkzeughalters und ein Verfahren zum Betrieb der Einrichtung anzugeben, welche Einrichtung konstruktiv einfach ist und zuverlässig eine hohe Reinigungswirkung erzielt.

Diese Aufgabe wird durch die Erfindung, wie sie in Anspruch 1 definiert ist, gelöst.

Im folgenden wird die Erfindung anhand einer lediglich ein Ausführungsbeispiel darstellenden Zeichnung näher erläutert.

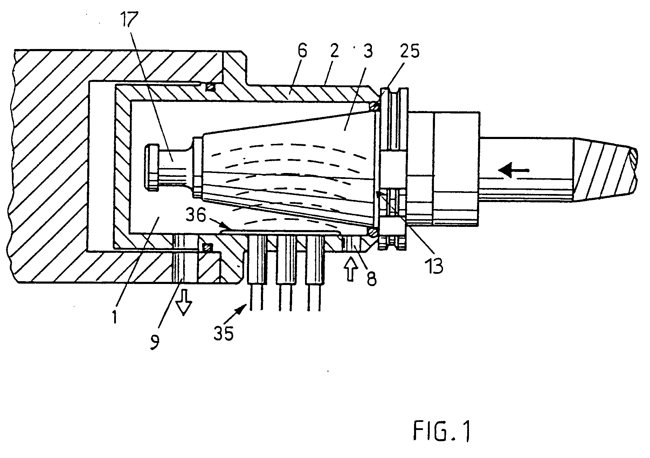

- Fig. 1: zeigt eine erfindungsgemässe Einrichtung im Längsschnitt.

Die Einrichtung nach Fig. 1 weist im wesentlichen eine Reinigungskammer 1 auf, die in einem Gehäuse 2 angeordnet ist. In die Reinigungskammer 1 ist der Schaftteil 3 eines Werkzeughalters 4 eingesetzt, in welchem ein Werkzeug 5, z.B. ein Fräswerkzeug, eingesetzt ist.

Die Reinigungskammer weist eine von einem Weichdichtungsring 25 umgebene Oeffnung 13 auf, in welche der Schaftteil 3 eingeführt wird. Ausserdem ist sie mit einem Zulauf 8 zur Zuführung von Reinigungsflüssigkeit und einem Ablauf 9 zur Ableitung derselben versehen.

Die Reinigungskammer 1 weist unabhängig von der Form des Schaftteils 3 eine zylindrische Form auf, so dass zwischen der Oberfläche des Schaftteils 3 und der Wand 6 der Reinigungskammer 1 ein Raum mit Reinigungsflüssigkeit entsteht.

Im Gehäuse 2 werden an einer oder mehreren Stellen Ultraschall-Generatoren 35 eingebaut, welche durch eine schwingungsfähige Metallmembran 36 von der Reinigungsflüssigkeit getrennt sind. Durch die Ultraschall-Generatoren 35 wird die Reinigungsflüssigkeit in hochfrequente Schwingungen versetzt, was eine intensive Reinigungswirkung an der Oberfläche des Schaftteils 3 bewirkt. Während der Ultraschall-Behandlung wird Reinigungsflüssigkeit durch die Zulauföffnung 8 eingeführt und durch die Ablauföffnung 9 abgeleitet, wodurch die gelösten Partikel aus der Reinigungskammer 1 entfernt werden.

In der Reinigungskammer 1 kann eine axial verschiebbare Schiebehülse (nicht dargestellt) vorgesehen sein, welche den Spannbolzen 17 am Ende des Schaftteils 3 fasst. So kann der Schaftteil 3 in der Reinigungskammer 1 fest eingespannt werden.

Bei der Reinigungs-Einrichtung nach Fig. 1 wird ein hoher Reinigungseffekt erreicht. Die an der Oberfläche des Schaftteils 3 haftenden Verunreinigungen werden zuverlässig gelöst und durch die durchfliessende Reinigungsflüssigkeit aus der Reinigungskammer 1 entfernt. Die Einrichtung ist in ihrem Aufbau einfach und weist keine bewegten mechanischen Teile auf. Wegen des kleinen Flüssigkeitsvolumens in der Reinigungskammer 1 ist auch eine verhältnismässig kleine Ultraschall-Leistung erforderlich.

Nach Beendigung der Ultraschallreinigung wird die Reinigungskammer 1 von Reinigungsflüssigkeit entleert und der Schaftteil 3 durch Zuführung von Druckluft getrocknet.

Die beschriebene Reinigungseinrichtung weist den Vorteil auf, eine sehr wirkungsvolle Flüssigkeits-Reinigung und eine Gastrocknung zu gewährleisten. Im Gegensatz zu den bekannten Einrichtungen wird die Uebertragung von Verunreinigungen durch den Schaftteil zuverlässig vermieden. Die Einrichtung kann sowohl im Werkzeugmagazin als auch in der Nähe der Maschinenspindel aufgestellt werden, wodurch im letzteren Fall keine zusätzlichen Leerfahrten zum Reinigungsort erforderlich sind. Wegen der Wirksamkeit der Reinigung ist auch ein verhältnismässig kleiner Bedarf an Reinigungsflüssigkeit erforderlich. Die beschriebene Reinigungseinrichtungen sind von Hand oder automatisiert bedienbar.

## Patentansprüche

1. Einrichtung zum Reinigen des Schaftteils (3) eines Werkzeugs (5) oder eines Werkzeughalters (4), mit welchem das Werkzeug (5) oder des Werkzeughalters (4) in der Maschinenspindel einer Werkzeugmaschine einspannbar ist, mit einer während der Reinigung den Schaftteil (3) umgebenden Reinigungskammer (1) mit einer von einem O-Ring (25) umgebenen Oeffnung (13) zur Aufnahme des Schaftteils (3), einem Zulauf (8) und einem Ablauf (9) in den Wänden der Reinigungskammer (1) für einen Flüssigkeits- und/oder Gaszufluss in die bzw. aus der Reinigungskammer (1), **dadurch gekennzeichnet, dass** in einer Wandpartie der Reinigungskammer (1) mindestens ein Ultraschall-Generator (35) zur Reinigung des Schaftteils (3) des Werkzeugs (5) oder des Werkzeughalters (4) durch die in hochfrequente Schwingungen versetzte, durch die Reinigungskammer (1) fliessende Reinigungsflüssigkeit angesetzt ist.

2. Einrichtung nach Anspruch 1, **dadurch gekennzeichnet, dass** der mindestens eine Ultraschall-Generator (35) von der Reinigungskammer (1) durch eine schwingungsfähige Metallmembran (36) getrennt ist.

3. Verfahren zum Betrieb einer Einrichtung nach einem der Ansprüche 1 oder 2, **dadurch gekennzeichnet, dass** anschliessend an die Flüssigkeitsreinigung der Schaftteil (3) durch Einführen von Druckluft getrocknet wird.

## Claims

1. Device for cleaning the shank part (3) of a tool (5) or of a tool holder (4), with which part the tool (5) or the tool holder (4) can be clamped in the machine spindle of a machine tool, having a cleaning chamber (1) surrounding the shank part (3) during cleaning, having an opening (13), surrounded by an O-ring (25), to receive the shank part (3), having an inlet (8) and an outlet (9) in the walls of the cleaning chamber (1) for a flow of liquid and/or gas into and out of the cleaning chamber (1), characterised in that in a wall part of the cleaning chamber (1) at least one ultrasound generator (35) is arranged to clean the shank part (3) of the tool (5) or of the tool holder (4) by means of the cleaning fluid which flows through the cleaning chamber (1) and is caused to oscillate at a high frequency.

2. Device according to claim 1, characterised in that the at least one ultrasound generator (35) is separated from the cleaning chamber (1) by a metal membrane (36) which is able to oscillate.

3. Method for operating a device according to one of claims 1 or 2, characterised in that after the fluid cleaning, the shank part (3) is dried by the introduction of compressed air.

## Revendications

1. Dispositif pour le nettoyage de la partie de fût (3) d'un outil (5) ou d'un porte-outils (4), au moyen duquel l'outil (5) ou le porte-outils (4) peut être serré dans la broche d'une machine-outil, comprenant une chambre de nettoyage (1) qui entoure la partie de fût (3) pendant le nettoyage, pourvue d'une ouverture (13), entourée d'un joint torique (25), pour recevoir la partie de fût (3), une admission (8) et une évacuation (9) dans les parois de la chambre de nettoyage (1) pour un écoulement de liquide et/ou de gaz vers la chambre de nettoyage (1) ou hors de celle-ci, caractérisé en ce qu'au moins un générateur à ultrasons (35) est prévu dans une partie de paroi de la chambre de nettoyage (1) pour le nettoyage de la partie de fût (3) de l'outil (5) ou du porte-outils (4), via le liquide de nettoyage qui s'écoule dans la chambre de nettoyage (1), soumis à des vibrations à haute fréquence.

2. Dispositif selon la revendication 1, caractérisé en ce que ledit au moins un générateur à ultrasons (35) est séparé de la chambre de nettoyage (1) par une membrane métallique (36) susceptible de vibrer.

3. Procédé pour faire fonctionner un dispositif selon l'une ou l'autre des revendications 1 et 2, caractérisé en ce que, à la suite du nettoyage de la partie de fût (3) au moyen d'un liquide, celle-ci est séchée par introduction d'air comprimé.
